# EUROPÄISCHE PATENTANMELDUNG

(11) **EP 4 270 228 A1**
(43) Veröffentlichungstag der Anmeldung: **01.11.2023**
(21) Anmeldenummer: 22170181.6
(22) Anmeldetag: 27.04.2022
(51) Int. Cl.: G06F 21/57

(54) **SOFTWARE-IMPLEMENTIERTE SPERRE**

(71) Anmelder: Siemens Aktiengesellschaft, 80333 München (DE)
(72) Erfinder: Falk, Rainer, 85586 Poing (DE)
(74) Vertreter: Siemens Patent Attorneys

(57) **Zusammenfassung**

Die Erfindung betrifft ein System (1), aufweisend:
- mindestens eine Systemressource (32),
- eine Starteinheit ausgebildet, ein Starten des Systems (1) durchzuführen, wodurch sich das System (1) in einem Arbeitszustand befindet, und
- eine Sperreinheit (31), ausgebildet:
- ein Aktivieren einer Software-implementierten Sperre (3121) der mindestens einen Systemressource umzusetzen,
- ein Setzen der Software-implementierten Sperre (3121) ab dem Aktivieren immer dann umzusetzen, wenn sich das System in dem Arbeitszustand befindet, wobei die Software-implementierte Sperre (3121) bei dem Starten des Systems (1) ungesetzt.
Außerdem betrifft die Erfindung außerdem ein Verfahren ausgebildet eine Software-implementierte Sperre (3121) mindestens einer Systemressource eines Systems (1) zu verwalten und ein zugehöriges Computerprogrammprodukt.

## Beschreibung

### Gebiet der Erfindung

Die vorliegende Erfindung betrifft ein System, welches durch eine Software-implementierte Sperre geschützt wird. Außerdem betrifft die Erfindung außerdem ein Verfahren ausgebildet eine Software-implementierte Sperre mindestens einer Systemressource eines Systems zu verwalten und ein zugehöriges Computerprogrammprodukt.

### Beschreibung des Stands der Technik

Beim Hochlauf eines Systems, insbesondere eines Geräts, wird häufig auf sensible in Dateien abgelegte Daten oder auf Geräte zugegriffen, insbesondere auf Konfiguration von Hardware-Komponenten oder es erfolgt ein Zugriff auf Schlüssel während einer Boot-Phase oder ein Beschreiben eines Flash-Speichers. Dabei handelt es sich um Daten, welche für einen sicheren Hochlauf erforderlich sind, im laufenden Betrieb aber nicht mehr zum Betrieb des Geräts nötig sind.

Um einen unzulässigen Zugriff im laufenden Betrieb zu verhindern, können entsprechende elektronische Zugriffsschutzschaltungen bei einem eingebetteten Gerät realisiert werden. Ein künftiger Zugriff wird dann durch die Hardware-basierte elektronische Zugriffsschutzschaltung verhindert. Diese kann auch als "Protection Latch", "Power-on Latch" oder "Security Latch" bezeichnet werden.

Ein herkömmliches Protection Latch erfordert jedoch ein spezielles Hardware-Schaltungsdesign. Dies ist auf manchen eingebetteten Geräten zwar umgesetzt. Eine solche Funktionalität ist jedoch nicht in allen eingebetteten Geräten verfügbar und kann ohne Schaltungs-Redesign nicht nachgerüstet werden. Ein solcher Schutz kann außerdem nicht auf offenen Compute-Plattformen umgesetzt werden, da diese eine solche spezielle elektrische Zugriffsschutzschaltung üblicherweise nicht aufweisen. Außerdem ist der Schutzumfang durch das SchaltungsDesign starr vorgegeben, insbesondere indem ein Zugriff auf einen festen oder vorgegebenen Speicherbereich oder auf einen Speicherbaustein komplett gesperrt wird, so können nicht nur einzelne Dateien gesperrt werden.

Von den Standard TCG DICE ist ein Power-on Latch bekannt, sodass ein Zugriff auf ein initiales Gerätegeheimnis (UDS, unique device secret) nur in einer frühen Boot-Phase technisch möglich ist.

Das Linux-Betriebssystem (bzw. Linux-Kernel) unterstützt Linux Security Module (LSM). Darüber lassen sich, zusätzlich zu den Dateisystem-Berechtigung, über Regeln systemweit verpflichtende Security-Regeln durchsetzen (mandatory access control, MAC). Bekannte LSMs sind AppArmor, SELinux, Smack, and TOMOYO.

Ein neueres LSM ist Landlock, über das ein Sandboxing von regulären Programmen realisiert werden kann, dessen Zielsetzung ist ähnlich zu der von AppArmor.

Es können LSMs auch proprietär implementiert werden. Darüber kann spezifische Security-Prüfungen verlässlich umgesetzt werden. Die Implementierung ist aber komplex und wird von Entwicklern deshalb häufig nicht umgesetzt.

Die Aufgabe der Erfindung besteht darin, eine Lösung für eine verbesserte Umsetzung einer Protection-Latch-Funktionalität bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein System, aufweisend:
- mindestens eine Systemressource,
- eine Starteinheit ausgebildet, ein Starten des Systems durchzuführen, wodurch sich das System in einem Arbeitszustand befindet, und
- eine Sperreinheit, ausgebildet:
   - ein Aktivieren einer Software-implementierten Sperre der mindestens einen Systemressource umzusetzen und
   - ein Setzen der Software-implementierten Sperre ab dem Aktivieren der Software-implementierten Sperre immer dann umzusetzen, wenn sich das System in dem Arbeitszustand befindet,
      wobei die Software-implementierte Sperre bei dem Starten des Systems ungesetzt ist.

Das Starten des Systems kann auch als Hochfahren, Hochlauf oder Booten bezeichnet werden. Es erfolgt insbesondere nach Anlegen einer Versorgungsspannung, nach Betätigen eines Rücksetz-Tasters (Reset-Taste). Dies kann auch als Power-Up-Reset bezeichnet werden. Weiterhin kann ein Starten als Neustart (Reboot) erfolgen, z.B. zum Einspielen eines Firmware-Updates. Während der Startphase werden beispielsweise Hardwarekomponenten oder Systemressourcen des Systems konfiguriert und es werden Softwarekomponenten von einem Programmspeicher des Systems in einen Arbeitsspeicher des Systems geladen, und es können Tests von Komponenten des Systems erfolgen. Nach Abschluss des Startens befindet sich da System im Arbeitszustand. Im Arbeitszustand kann das System seine vorgesehene Hauptaufgabe erfüllen, z.B. eine Steuerungsfunktion oder eine Überwachungsfunktion eines technischen Systems.

Dass die Software-implementierte Sperre bei dem Starten ungesetzt ist, wird dadurch erreicht, dass das Auslösen eines Startvorgangs, d.h. ein Initiieren eines Resets oder Neustarts des Systems, dazu führt, dass die Software-basierte Sperre sich in einen Initialzustand befindet oder in diesen durch das Auslösen versetzt wird. In diesem Initialzustand ist die Sperrfunktionalität der Software-basierten Sperre nicht gesetzt. Die Software-basierte Sperre befindet sich in einem Initialzustand, da der sie realisierende Programmcode beim Starten des Systems aus einem Programmspeicher des Systems geladen und gestartet wird. Dadurch ist beim Starten des Systems ein Zugriff auf eine Systemressource des Systems möglich, bis die Software-basierte Sperre für das Sperren des Zugriffs auf die Systemressource, wobei der Zugriff durch eine auf dem System ausgeführte Software erfolgt, durch eine beim Starten des Systems weitere ausgeführte Software des Systems aktiviert wird, die nach dem erfolgten Laden und Starten des Programmcodes der Software-basierten Sperre geladen und ausgeführt wird. Eine auf dem System ausgeführte Software kann die Software-basierte Sperre also aktivieren, sodass bis zu einem erneuten Startvorgang ein weiterer Zugriff auf die Systemressource durch die Software-basierte Sperre des Systems blockiert ist.

Die Software-basierte Sperre kann insbesondere als ein Flag umgesetzt sein. Das Flag würde, abgefragt werden und eine Bedingung geprüft werden, beispielsweise: if( sperrFlag==true) then denyAccess.

Die erfindungsgemäße Software-basierte Sperre kann unter Nutzung kryptographischer Verfahren, insbesondere bei der Aktivierung und/oder dem Setzen der Sperre bei einem Wechsel in den Arbeitszustand bzw. einer Startphase geschützt sein. Sie kann auch als Software-basierte kryptographische Sperre bezeichnet werden. Durch den kryptographischen Schutz wird erreicht, dass die Aktivierung der Sperre verlässlich erfolgt. Dies kann insbesondere dadurch erfolgen, dass das Starten des Systems kryptographisch geschützt erfolgt. Ein kryptographisch geschütztes Starten kann auch als Secure Boot oder als Verified Boot bezeichnet werden. Durch ein kryptographisch geschütztes Starten kann somit eine kryptographische Sperre verlässlich realisiert sein, ohne dass für die Sperre selbst eine Hardware-basierte Schutzschaltung vorgesehen sein muss. Weiterhin kann die kryptographische Sperre die Sperrinformation kryptographisch geschützt vorhalten, insbesondere indem sie durch eine kryptographische Prüfsumme, insbesondere eine bei der Aktivierung der Sperre oder bei dem Setzen der Sperre bei einem Wechsel des Systems in den Arbeitszustand gebildete digitale Signatur oder eine bei Aktivierung der Sperre gebildeten Nachrichtenauthentisierungscode, geschützt wird, oder indem bei Aktivierung der Sperre und/oder bei einem Setzen der Sperre bei einem Wechsel des Systems in den Arbeitszustand eine verschlüsselte Sperrinformation gebildet wird. Die kryptographische Prüfsumme wird dabei durch die kryptographische Sperre gebildet bzw. die Verschlüsselung erfolgt durch die kryptographische Sperre. Bei Nutzung der kryptographisch geschützten Sperrinformation durch die kryptographische Sperre prüft die kryptographische Sperre die kryptographisch geschützten Sperrinformation oder entschlüsselt die verschlüsselte Sperrinformation. Dabei ist es möglich, dass die kryptographische Sperre bei dem Startvorgang einen kryptographischen Schlüssel oder ein kryptographisches Schlüsselpaar bestehend aus einem privatem und einem öffentlichen Schlüssel generiert. Bei Nutzung eines asymmetrischen Schlüsselpaars kann die kryptographische Sperre den privaten Schlüssel zum Bilden der kryptographisch geschützten Sperrinformation bzw. zum Verschlüsseln der Sperrinformation verwenden. Bei Aktivierung der Sperre und/oder bei einem Setzen der Sperre bei einem Wechsel des Systems in den Arbeitszustand kann die kryptographische Sperrfunktion den privaten Schlüssel löschen. Somit kann die damit gebildete kryptographisch geschützte Sperrinformation nur noch überprüft beziehungsweise entschlüsselt werden, aber sie kann prinzipiell nicht mehr unbemerkt verändert werden. Dabei kann die kryptographische Sperre sogenannte Whitebox-Kryptographie oder Obfuskation verwenden, um einen kryptographischen Schlüssel oder eine kryptographische Operation zu schützen. Weiterhin ist es möglich, dass eine kryptographische Sperre einen kryptographischen Selbstschutz realisiert. Dieser kann insbesondere die Integrität des Programmcodes der Software-basierten Sperre zur Laufzeit weiderholt kryptographisch überprüfen, indem eine kryptographische Prüfsumme des Programmcodes der Software-basierten Sperre ermittelt und überprüft wird. Dies kann in einer Variante durch obfuszierten Code erfolgen, um eine Manipulation zu erschweren.

Das System weist vorzugsweise eine Mehrzahl von Systemressourcen auf. Beim Aktivieren einer Sperre zum Unterbinden eines Zugriffs auf eine Systemressource kann vorzugsweise die betroffene Systemressource vorgegeben sein, z.B. durch Angabe eines Bezeichners der Systemressource. Die Software, die die Sperrfunktionalität aktiviert, kann dazu bei einem Aufruf der Software-basierten Sperre einen Bezeichner der Systemressource als Aufrufparameter übergeben, der die Systemressource, für die eine Sperrfunktionalität eingerichtet oder aktiviert werden soll, angibt. Weiterhin ist es möglich, einen weiteren Aufrufparameter zu übergeben, der die Art der einzurichtenden beziehungsweise einzurichtenden Sperre angibt, z.B. Lesezugriff oder Schreibzugriff auf die angegebene Systemressource. Dies hat den Vorteil, dass die Aktivierung der Sperre zum Unterbinden eines Zugriffs auf eine erste Systemressource unabhängig von der Aktivierung der Sperre auf eine zweite Systemressource erfolgen kann. Bei einer Aktivierung einer Sperre kann ein Bezeichner der Systemressource angegeben werden, auf die die Sperre wirkt. Dadurch ist die Software-basierte Sperre universell und flexibel einsetzbar, um eine Sperrfunktionalität zum Sperren des Zugriffs auf beliebig wählbare beziehungsweise beliebig vorgebbare Systemressourcen des Systems zu aktivieren.

Aus dem Setzen der Software-implementierten Sperre ab dem Aktivieren folgt, dass die Sperre nach jedem wiederholten Starten gesetzt wird, wodurch sie sperrt, während jedem Starten befindet sich die Sperre hingegen in einem ungesetzten Zustand.

Die Software-implementierte Sperre, im Folgenden auch allgemein als "Sperre" bezeichnet, setzt eine äquivalente Funktionalität wie eine Hardware-basierte Schutzschaltung, insbesondere ein Protection Latch oder ein Power-on Latch oder ein Security Latch, um. Dabei ist jedoch durch die Angabe eines Bezeichners einer Systemressource vorgebbar, auf welche Systemressource die Sperre wirkt. Dies ist im Gegensatz zu einer Hardware-basierten Schutzschaltung somit nicht unveränderbar festgelegt. So kann z.B. durch eine Firmware-Aktualisierung die Teilmenge der Systemressourcen geändert oder erweitert werden, für die bei einem Startvorgang eine Sperre aktiviert wird.

Ein Aspekt der Erfindung besteht somit darin, eine einfachere und flexiblere und dennoch verlässliche Umsetzung einer Protection-Latch-Funktionalität, bereitzustellen, welche ohne eine spezielle Hardware-Unterstützung umsetzbar ist.

Insbesondere wird somit eine Software-implementierte Sperre, insbesondere ausgebildet als Linux-Security-Modul (Protection Latch LSM), vorgeschlagen, welche eine ähnliche Funktionalität wie ein Hardware-basiertes Protection Latch in einem System Software-implementiert (Protection Latch Software) umsetzt.

Solange der Kernel eines auf dem System ausgeführten Betriebssystems unkompromittiert ist, ist ein Zugriff auf die durch die Software-implementierte Sperre, auch als Software Protection-Latch bezeichenbar, geschützte Systemressource erst bei einem nächsten Start des Systems, insbesondere ein Gerät, nach einem Power-Cycle oder Reset wieder möglich. Sobald der Startvorgang abgeschlossen ist und sich das System in dem Arbeitszustand befindet, ist die Sperre wieder aktiv.

Die Sperre kann somit nicht durch Software, insbesondere nicht durch eine im Benutzerraum (engl. User Space) ausgeführte Software, zurückgenommen werden. Sie gilt bis zum nächsten Start des Systems, auch als Reboot, Reset oder Power-Cycle bezeichenbar, d.h. die gilt bis zum nächsten Laden des Betriebssystem-Kernels.

Dieser Ansatz ermöglicht auf einfache Weise, dass ein Zugriff auf Systemressourcen, insbesondere Dateien, gesperrt werden kann, wenn der Zugriff nur während einer Anfangsphase, d.h. während des Systemstarts, erforderlich ist.

Die Erfindung hat den Vorteil, dass der Zugriff auf einzelne Dateien oder andere Systemressourcen einfach gesperrt werden kann, ohne dass eine Security-Policy für ein Mandatory Access Control System wie z.B. SELinux, SMACK oder AppArmor erstellt werden muss. Dadurch kann mit sehr wenig Entwicklungsaufwand die Robustheit gegenüber Software-basierten Angriffen aus dem Benutzerraum verbessert werden.

Die Funktionalität eines Security-Latches kann außerdem ohne spezielle Hardware-Unterstützung auf einem Linux-basierten System oder Gerät verlässlich umgesetzt werden.

Zusätzlich kann die Funktionalität, unabhängig von den Berechtigungen, nicht durch Programme umgangen werden, die als User-Space-Prozess ausgeführt werden. Das hat den Vorteil, dass auch eine Schadsoftware, die mit Root-Rechten ausgeführt wird, keinen Zugriff auf die gesperrten Dateien hat. So könnte insbesondere selbst eine Ransomware, die mit Root-Rechten ausgeführt wird, die durch die Software-basierte Sperre, d.h. durch das Software-basierte Security-Latch, geschützten Systemressourcen, insbesondere Dateien, nicht löschen oder verschlüsseln.

Die Funktionalität ist außerdem einfach verständlich, sodass der entsprechende Schutz von Entwicklern ohne spezielles Security-Know-How umgesetzt werden kann und die Hürde, welche bei bisherigen Software-basierten Lösungen besteht, wegfällt. Insbesondere bei einer Embedded-Entwicklung kann die Schutzfunktionalität durch die vorhandene Hardware-Analogie einfach von Embedded-Entwicklern verstanden werden. Insbesondere kann außerdem der Schutzumfang, d.h. die geschützten Dateien, im Rahmen der Entwicklung schrittweise ausgeweitet werden, ohne dass eine komplexe Security-Policy zu erstellen wäre. Dadurch ist die Hürde, dass normale Entwickler einen Mandatory-Access-Control-Schutz in einem System verwenden, weniger hoch.

Das konzeptionell sehr einfache LSM erfordert außerdem, anders als z.B. SELinux, nicht, dass Dateien und Nutzer spezielle Security-Label oder Kategorien zugeordnet sind.

Zusätzlich kann die vorgeschlagene Lösung durch ein Firmware-Update auch auf bestehenden Systemen, d.h. Bestandsgeräten, nachträglich umgesetzt werden, da kein Hardware-Redesign wie bei herkömmlichen Hardware-basierten Protection Latches erforderlich ist.

In einer Weiterbildung der Erfindung ist die Sperreinheit außerdem ausgebildet, die Software-implementierte Sperre bei einem Beenden des Systems oder bei einem dem Starten vorrangehenden Prozess auszusetzen, d.h. in einen ungesetzten Zustand zu versetzen. Das Beenden des Systems umfasst ein Herunterfahren oder einen Neustart, auch als Reboot, Reset und Power-Cycle bezeichenbar.

In einer weiteren Weiterbildung der Erfindung ist die Software-implementierte Sperre nicht durch einen Befehl aus einem Benutzerraum, insbesondere des Benutzerraums des Systems, deaktivierbar oder aussetzbar, d.h. in einen ungesetzten Zustand versetzbar ist. Dabei bedeutet "nicht durch einen Befehl aus einem Benutzerraum", dass die Sperre nicht durch eine Benutzerraum-Software, ein Nutzerprogramm oder einen Aufruf aus dem Benutzerraum/User Space deaktivierbar oder aussetzbar ist. Nicht deaktivierbar umfasst hierbei, dass die Sperre nicht durch eine Benutzerraum-Software modifizierbar ist und keine Teile der Sperre deaktivierbar oder hinzufügbar sind.

Das hat den Vorteil, dass ein Zugriff auf eine Systemressource während des laufenden Betriebs derart gesperrt werden kann, dass die Sperre durch eine weitere Software nicht umkehrbar ist. Unter der weiteren Software ist insbesondere Software des Benutzerraums (User-Space Software) zu verstehen.

In einer weiteren Weiterbildung der Erfindung weist das System außerdem auf:
- eine Erstelleinheit, ausgebildet die Software-implementierte Sperre vor dem Aktivieren zu erstellen.

Unter einem Erstellen ist ein Setzen oder ein Hinzufügen der Sperre zu verstehen. Zum Zeitpunkt des Erstellens kann die Sperre noch nicht aktiviert worden sein, sie kann aber auch direkt mit dem Erstellen erstmalig aktiviert werden (atomare Aktion), d.h. quasi in einem aktivierten Zustand hinzugefügt werden.

In einer weiteren Weiterbildung der Erfindung weist das System außerdem auf:
- eine Schreibeinheit, ausgebildet eine Zusatzinformation zu der Systemressource vor oder zeitgleich dem Aktivieren hinzuzufügen.

In dieser Ausführungsform erfolgt das Aktivieren direkt nach dem Hinzufügen der Zusatzinformation oder quasi zeitgleich, insbesondere durch eine atomare Aktion.

In einer weiteren Weiterbildung der Erfindung umfasst die Zusatzinformation:
- eine Firmware-Versionsinformation und/oder
- ein öffentlicher Geräteschlüssel und/oder
- ein Gerätezertifikat und/oder
- ein Firmwaresignaturprüfungszertifikat und/oder
- eine Referenzinformation für eine Laufzeitintegritätsüberprüfung und/oder
- mindestens einen ersten Parameter und mindestens einen zweiten Parameter, wobei das Aktivieren erfolgt, sobald der erste Parameter gesetzt ist, und wobei die Software-implementierten Sperre einen Zugriff auf den zweiten Parameter sperrt.

In einer weiteren Weiterbildung der Erfindung weist das System außerdem auf:
- eine Ausgabeeinheit, ausgebildet eine Statusinformation, welche angibt, ob sich die Software-implementierte Sperre in einem aktivierten Zustand oder einem ungesetzten Zustand befindet, d.h. ob die Software-implementierte Sperre gesetzt oder ungesetzt ist, auszugeben,
   wobei die Statusinformation insbesondere eine geschützte Signatur aufweist

Dabei liegt der aktivierte Zustand insbesondere nach dem Aktivieren und jedem Setzen vor. Der ungesetzte Zustand liegt insbesondere vor, wenn die Software-implementierte Sperre nach dem Starten des Systems nicht in einen gesetzten Zustand versetzt wird oder bei einem fälschlichen Nicht-Aktivieren der Sperre.

Diese Ausführungsform nutzt den Vorteil der Erfindung, dass eine Prüfung der Funktionalität zur Laufzeit weniger rechenaufwendig als bei anderen LSMs, da der aufrufende Nutzer oder Prozess kein Entscheidungskriterium ist.

In einer weiteren Weiterbildung der Erfindung erfolgt das Aktivieren und das Setzen der Software-implementierten Sperre unabhängig von einem Nutzer des Systems und einem auf dem System laufenden Benutzerraum-Prozess. "Unabhängig" bedeutet hierbei, dass das Aktivieren für jeden Nutzer, jeden Benutzerraum-Prozess und jede Applikation auf selbe Art und Weise erfolgt. Anders ausgedrückt, bedeutet dies, dass die Sperre grundsätzlich gilt, d.h. unabhängig davon, von wem (Nutzer, Benutzerraum-Prozess, Applikation) der Zugriff ausgeht. Dadurch ist die Implementierung wenig komplex und lässt sich leicht umsetzen und prüfen.

In einer weiteren Weiterbildung der Erfindung ist das System ausgebildet als:
- ein Gerät und/oder
- ein IoT-Gerät und/oder
- ein eingebettetes Gerät und/oder
- eine Hardware-Komponente.

In einer weiteren Weiterbildung der Erfindung ist die Sperreinheit durch:
- ein Sicherheitsmodul und/oder
- ein Linux Security Modul (LSM) und/oder
- ein Betriebssystem und/oder
- ein Linux-Betriebssystem und/oder
- eine Firmware
des Systems ausgebildet.

Die Erfindung kann durch ein durch ein Betriebssystem ladbares Sicherheitsmodul, auch als Security-Modul bezeichenbar, realisiert sein, oder sie kann fest in ein Betriebssystem integriert sein. Die Erfindung kann insbesondere auf einem Linux-basierten Gerät durch ein Linux Security Modul LSM mit relativ wenig Aufwand umgesetzt werden. Allgemein kann eine solche Funktionalität jedoch auch auf anderen Betriebssystemen umgesetzt werden.

Auch ist es möglich, dass die Software-basierte Protection Latch Funktionalität nicht durch ein separates Security-Modul realisiert ist, sondern fest in ein Betriebssystem oder allgemein in eine Geräte-Firmware integriert ist.

In einer weiteren Weiterbildung der Erfindung sperrt die Software-implementierte Sperre:
- einen Lesezugriff auf die Systemressource und/oder
- einen Schreibzugriff auf die Systemressource und/oder
- eine Ausführung der Systemressource und/oder
- ein Directory-Listing und/oder
- ein Löschen der Systemressource und/oder
- ein Anlegen einer weiteren Systemressource und/oder
- ein Erstellen und/oder ein Aktivieren weiterer Software-implementierter Sperren.

Die zuvor genannten Optionen können auch als Art der Sperre bezeichnet werden. Sie können insbesondere mit der Statusinformation aus einer vorangegangenen Weiterbildung abgefragt und ausgegeben werden.

Um eine unbeabsichtigte, missbräuchliche Nutzung der Sperrfunktionalität des Protection Latch LSMs zu verhindern, kann durch das Sperren eines Erstellens und/oder eines Aktivierens weiterer Software-implementierter Sperren insbesondere gesperrt werden, dass weitere Zugriffe auf die aktive Sperrfunktion oder zusätzliche Sperrfunktionen gesperrt werden können, d.h. eine aktive Sperre kann nicht rückgängig gemacht und es können keine zusätzlichen Sperren hinzugefügt werden.

In einer weiteren Weiterbildung der Erfindung ist die mindestens eine Systemressource als:
- eine Datei und/oder
- eine Konfigurationsdatei einer Hardware-Komponente und/oder
- ein kryptographischer Schlüssel und/oder
- eine Pseudo-Datei, welche insbesondere eine Hardware-Komponente in Form einer Datei verfügbar macht und/oder
- ein Systemaufruf (system call) und/oder
- eine durch einen Systemaufruf setzbare Information, insbesondere ein Text und/oder ein Attribut-Wert-Paar (Text, Attribute-Value-Pair)
ausgebildet.

Die durch einen Systemaufruf setzbare Information ermöglicht, wenn Security-kritische Events im laufenden Betrieb erkannt werden, insbesondere durch eine Laufzeitintegritätsprüfung oder ein Host-basiertes Angriffserkennungssystem (engl. hostbased intrusion detection system, HIDS) oder einen Runtime Health Check, eine entsprechende Information im Dateisystem zu hinterlegen. Dies erfolgt insbesondere durch ein Aktivieren der bereits bestehenden, aber zuvor noch inaktiven Security-Latch Funktionalität. Sobald die Security-Latch-Funktionalität für diese Datei aktiviert ist, kann diese Information auch durch eine Schadsoftware oder einen Angreifer, der sich auf dem System befindet, nicht mehr zurückgesetzt oder manipuliert werden. Somit liegt diese Information verlässlich nach einem erkannten Angriff vor. Das System kann somit erkennen, dass es zurückliegend manipuliert wurde und vorgegebene Maßnahmen einleiten, insbesondere ein Senden einer entsprechenden Log-Nachricht an einen Log-Server, Einleiten einer Recovery-Prozedur, insbesondere ein Laden und Einspielen von Patchen oder Firmware-Updates.

In einer weiteren Weiterbildung der Erfindung erfolgt das Aktivieren der Software-implementierten Sperre durch einen Systemaufruf oder ein Kommandozeilen-Programm. Somit muss lediglich ein Aufruf (Systemaufruf an das LSM; auch über ein Kommandozeilen-Programm aufrufbar) erfolgen, der als Aufrufparameter die entsprechende Datei spezifiziert.

Die Erfindung umfasst außerdem ein Verfahren ausgebildet eine Software-implementierte Sperre mindestens einer Systemressource eines Systems zu verwalten,
aufweisend die Schritte:
- ein Aktivieren der Software-implementierten Sperre auf die mindestens eine Systemressource,
- ein Setzen der Software-implementierten Sperre ab dem Aktivieren immer dann, wenn sich das System in einem Arbeitszustand befindet, wobei sich das System nach einem Starten des Systems in dem Arbeitszustand befindet,
- Ein Aussetzen der Software-implementierten Sperre, sodass die Software-implementierten Sperre bei dem Starten des Systems ungesetzt ist.

Das Aussetzen der Software-implementierten Sperre bedeutet, dass die Sperre in einen ungesetzten Zustand versetzt wird.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Im Folgenden ist ein konkretes Ausführungsbeispiel anhand eines Systemaufrufs, auch als System Call bezeichenbar, beschrieben:
- protection_latch_add_lock(file, [options])
- protection_latch_lock_self()

Der Zugriff auf "/dev/mem" kann z.B. durch folgende System-Call-Aufrufe in einem Programm erreicht werden:
fd = open("/dev/mem", O_PATH | O_CLOEXEC);
protection_latch_add_lock(fd);

Die beim Aufruf von "open()" angegebenen Optionen ("O_PATH | O_CLOEXEC") haben für die vorliegende Erfindung nebensächliche Bedeutung. Die Dokumentation zu "open()" ist öffentlich verfügbar (O_PATH bedeutet, dass die Datei selbst nicht geöffnet wird, sondern dass lediglich ein File-Deskriptor auf die Datei bereitgestellt wird; O_CLOEXEC hilft, Race-Conditions bei nebenläufigen Programmen zu vermeiden).

Die Funktionalität kann auch über einen Kommandozeilenaufruf zugreifbar gemacht werden, z.B.:
/user/me/> /bin/protection_latch -addlock /dev/mem

In einer Variante ist die Sperre unmittelbar nach Hinzufügen der Sperre aktiv (Aufruf des System-Calls protection_latch_add_lock() bzw. von protection_latch -addlock).

In einer anderen Variante wird die Sperre jedoch erst durch einen separaten Aufruf eines Aktivierungskommandos aktiv geschaltet (z.B. protection_latch_activate() ).

Es ist auch möglich, dass die Aktivierung automatisch durch Aufruf von protection_latch_lock_self() erfolgt, d.h. dass die Aktivierung scharf geschaltet wird, und dass danach keine weiteren Sperren mehr hinzugefügt werden können. Bei add_lock() können hingegen weitere Sperren nach wie vor hinzugefügt werden.

Optional kann weiterhin die Möglichkeit vorgesehen sein, den aktuellen Lock-Status abzufragen, z.B.:
/user/me/> /bin/protection_latch -checklock
/dev/mem

Es wird dabei die Liste der zugriffsgesperrten Dateien ausgegeben (in diesem Beispiel nur /dev/mem ).

Weiterhin kann die Möglichkeit vorgesehen sein, eine kryptographisch geschützte Attestierung anzufordern, die den aktuellen Lock-Status kryptographisch geschützt bestätigt, d.h. sodass der aktuelle Lock-Status auch gegenüber Dritten nachgewiesen werden kann (z.B. protection_latch_attestlock ). Dazu verwendet das Protection-Lock-LSM einen privaten kryptographischen Schlüssel (asymmetrischer privater Schlüssel, geheimer symmetrischer Schlüssel), um eine kryptographische Prüfsumme der Attestierung zu berechnen. Die Attestierung umfasst neben der Information zum aktuellen Lock-Status vorzugsweise weiterhin eine Aktualitätsinformation z.B. einen Zeitstempel oder einen Zählerwert (z.B. Boot Cycle Counter, Clock Ticks), und eine Plattform-Identifizierungsinformation (z.B. Seriennummer des Prozessors oder des Geräts). Weiterhin kann vorgesehen sein, dass eine freiwählbare, aber nicht mehr durch Software änderbare Zusatzinformation, in Form einer Systemressource, insbesondere in Form einer Datei, hinterlegt werden kann, die dann ebenso wie der Lock-Status abgefragt oder attestiert werden kann, z.B.:
/user/me/> /bin/protection_latch -addunmutableinfo <text>

Über einen solchen Aufruf können z.B. Statusinformationen wie Firmware-Versionsinformation oder ein öffentlicher Geräteschlüssel oder ein Gerätezertifikat oder ein Firmwaresignaturprüfungs-Zertifikat oder eine Referenzinformation für eine Laufzeitintegritätsüberprüfung unveränderbar in einer Startphase des Geräts auf dem Gerät hinterlegt werden. Sie können dann zur Laufzeit selbst durch eine manipulierte Software nicht mehr verändert werden. Das Anlegen der Zusatzinformation und das Sperren der angelegten Zusatzinformation kann insbesondere durch eine atomare Aktion geschehen, das heißt, dass beide Aktionen, das Anlegen und das Sperren, quasi gleichzeitig geschehen und eine unversperrte Datei nie als solche angelegt wird.

In einer Variante können zusätzlich zur Zusatzinformation zwei Parameter (attribute, value) angegeben werden. Bei dieser Variante ist es möglich, dass der Wert value, der einem Attribut attribute zugeordnet ist, nicht mehr änderbar ist, sobald ein Wert für dieses Attribute attribute erstmalig gesetzt wurde, z.B.:
/user/me/> /bin/protection_latch -addunmutableAVP <attribute> <value>

Falls ein Sperren von Zugriffen bei einem Gerät für bestimmte Dateien nicht generell verwendet werden soll, kann das Protection-Latch-LSM bei dieser Variante lediglich dazu verwendet werden, um bestimmte Informationen (Text, Attribute-Value-Paare) unveränderbar abzulegen, sodass eine verlässliche Referenz-Information zur Laufzeit durch Programme abfragbar ist, z.B. zur Durchführung von Integritätsprüfungen (z.B. Firmware-Update, Runtime Healtch Check).

Weiterhin kann vorgesehen sein, dass der Zugriff auf manche Kernel Features (z.B. bestimmte System-Calls, Zugriff auf bestimmte Dateien) erst dann möglich ist, wenn bestimmte Locks gesetzt wurden. So kann z.B. ein Zugriff auf bestimmte Außenschnittstellen wie z.B. USB-Ports oder eine Netzwerkschnittstelle erst dann freigegeben werden, wenn bestimmte erwartete Locks tatsächlich aktiviert wurden. Die entsprechende Policy kann hartcodiert im erfindungsgemäßen Linux-Security-Modul (Protection Latch LSM) enthalten sein. Grundsätzlich ist aber auch möglich, dass eine solche Policy geladen werden kann, z.B. durch einen Systemaufruf (z.B. protection_latch_load_activationpolicy).

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnung ersichtlich.

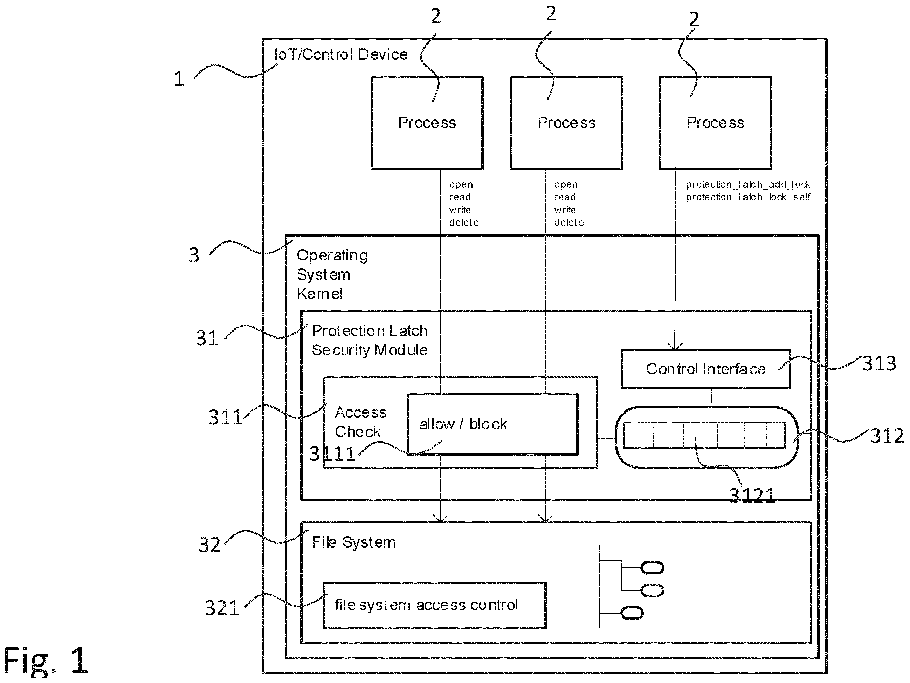

Es zeigt
- Fig. 1: ein erfindungsgemäßes System.

### DETAILLIERTE BESCHREIBUNG DER ERFINDUNG

Fig. 1 veranschaulicht eine mögliche Umsetzung der Erfindung. Es ist ein spezielles Security-Modul 31 als Teil eines Betriebssystem-Kernels 3 auf einem IoT-Gerät 1 oder einem Steuergerät 1 vorgesehen.

Auf einem IoT-Gerät 1 oder einem Steuergerät 1 laufen verschiedene Prozesse 2, die auch als Benutzerraum-Prozess bezeichnet werden können.

Das Security-Modul 31 prüft 3111 einerseits Berechtigungen eines Zugriffs durch einen Nutzer oder einen Benutzerraum-Prozess auf eine Datei eines Dateisystem 32 im Rahmen einer Zugriffsprüfung 311.

Das Security-Modul 31 prüft nach einem Aspekt der Erfindung die Zulässigkeit entsprechend der Sperre 3121 und deren Sperrinformation 312 im Rahmen der Zugriffsprüfung 311.

Für einzelne Dateien des Dateisystems 32 oder für ganze Verzeichnisse 32 kann durch einen Aufruf von protection_lock_add_lock über ein Steuerfeld beziehungsweise eine Steuerschnittstelle 313, auch als Control Interface 313 bezeichenbar, eine Sperre 3121|zum Zugriff auf eine Datei eines Dateisystems 32 gesetzt werden, die durch Software nicht mehr zurückgenommen werden kann. Die Sperre 3121 und die Sperrinformation 312 können durch eine File Access Block List 312 verwaltet werden. Die File Access Block List 312 enthält die Sperrinformation 312 zu der zumindest einen aktivierten beziehungsweise gesetzten Sperre 3121. Sie umfasst dazu zumindest einen Sperreintrag, der angibt, auf welche Datei oder auf welche Dateien die durch den jeweiligen Sperreintrag definierte Sperre wirkt. Weiterhin kann ein Sperreintrag angeben, auf welche Zugriffsarten sich die Sperre bezieht, z.B. auf einen Lesezugriff oder auf einen Schreibzugriff. Die Sperreinträge können als Liste verwaltet werden. Es ist allgemein jedoch auch möglich, die Sperreinträge als Baum-Datenstruktur oder in einer anderen Datenstruktur zu verwalten. Die Sperrinformation 312 liegt dabei unabhängig vom Dateisystem 32 und dessen im Dateisystem verwalteten Dateizugriffsregeln 321 vor. Die Sperrinformation 312 kann weiterhin eine kryptographische Prüfsumme der Sperreinträge oder der Liste von Sperreinträgen umfassen. Diese kann bei Aktivieren der Sperre oder bei einem Setzen der Sperre bei einem Wechsel des Systems in den Arbeitszustand ermittelt werden. Die kryptographische Prüfsumme der Sperreinträge 3121 oder der Liste von Sperreinträgen 312 kann auf Anforderung, z.B. durch einen API-Aufruf, oder automatisch bei einer Zugriffsprüfung 311, überprüft werden. Die Überprüfung der kryptographischen Prüfsumme der Sperrinformation 312 erfolgt durch die Zugriffsprüfung 311. Dadurch kann eine Manipulation der Sperrinformation 312 erkannt werden. Ein Zugriff kann unabhängig von den Sperreinträgen durch die Zugriffsprüfung 311 gesperrt werden, wenn die in der Sperrinformation 312 enthaltene kryptographische Prüfsumme der Sperreinträge ungültig ist.

Die Sperre 3121 gilt unwiderrufbar bis zum nächsten Reboot (Reset oder Power-Cycle), d.h. bis zum nächsten Laden des Betriebssystem-Kernels 3. Es kann eine Sperre 3121 nur hinzugefügt und aktiviert werden, aber eine Rücknahme einer aktivierten Sperre 3121 ist in einem laufenden System nicht möglich. Die Sperre 3121 gilt grundsätzlich, d.h. unabhängig davon, von wem (Nutzer, Benutzerraum-Prozess 2) der Zugriff ausgeht. Sie wirkt zusätzlich zu den bekannten Dateizugriffsregeln 321 (file system access control) des Dateisystems 32.

Weiterhin kann ein Hinzufügen von weiteren Sperren 3121 verhindert werden, indem protection_latch_lock_self() aufgerufen wird.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. System (1), aufweisend:
- mindestens eine Systemressource (32),
- eine Starteinheit ausgebildet, ein Starten des Systems (1) durchzuführen, wodurch sich das System (1) in einem Arbeitszustand befindet, und
- eine Sperreinheit (31), ausgebildet:
- ein Aktivieren einer Software-implementierten Sperre (3121) der mindestens einen Systemressource umzusetzen,
- ein Setzen der Software-implementierten Sperre (3121) ab dem Aktivieren immer dann umzusetzen, wenn sich das System in dem Arbeitszustand befindet,
wobei die Software-implementierte Sperre (3121) bei dem Starten des Systems (1) ungesetzt ist.

2. System (1) nach Anspruch 1,
wobei die Sperreinheit außerdem ausgebildet ist, die Software-implementierte Sperre (3121) bei:
- einem Beenden des Systems (1) oder
- einem dem Starten vorrangehenden Prozess in einen ungesetzten Zustand zu versetzen.

3. System (1) nach einem der vorhergehenden Ansprüche,
wobei die Software-implementierte Sperre (312) nicht durch einen Befehl aus einem Benutzerraum in einen ungesetzten Zustand versetzbar ist.

4. System (1) nach einem der vorhergehenden Ansprüche, außerdem aufweisend:
- eine Erstelleinheit, ausgebildet die Software-implementierte Sperre (3121) vor dem Aktivieren zu erstellen.

5. System (1) nach einem der vorhergehenden Ansprüche, außerdem aufweisend:
- eine Schreibeinheit, ausgebildet eine Zusatzinformation zu der Systemressource (32) vor oder zeitgleich dem Aktivieren hinzuzufügen.

6. System (1) nach Anspruch 5,
wobei die Zusatzinformation umfasst:
- eine Firmware-Versionsinformation und/oder
- ein öffentlicher Geräteschlüssel und/oder
- ein Gerätezertifikat und/oder
- ein Firmwaresignaturprüfungszertifikat und/oder
- eine Referenzinformation für eine Laufzeitintegritätsüberprüfung und/oder
- mindestens einen ersten Parameter und mindestens einen zweiten Parameter, wobei das Aktivieren erfolgt, sobald der erste Parameter gesetzt ist, und wobei die Software-implementierten Sperre (3121) einen Zugriff auf den zweiten Parameter sperrt.

7. System (1) nach einem der vorhergehenden Ansprüche, außerdem aufweisend:
- eine Ausgabeeinheit, ausgebildet eine Statusinformation, welche angibt, ob die Software-implementierte Sperre (3121) gesetzt oder ungesetzt ist, auszugeben,
wobei die Statusinformation insbesondere eine geschützte Signatur aufweist

8. System (1) nach einem der vorhergehenden Ansprüche,
wobei das Aktivieren und das Setzen der Software-implementierten Sperre (3121) unabhängig von:
- einem Nutzer des Systems (1) und
- einem auf dem System (1) laufenden Benutzerraum-Prozess (2)
erfolgt.

9. System (1) nach einem der vorhergehenden Ansprüche, ausgebildet als:
- ein Gerät (1) und/oder
- ein IoT-Gerät (1) und/oder
- ein eingebettetes Gerät (1) und/oder
- eine Hardware-Komponente (1).

10. System (1) nach einem der vorhergehenden Ansprüche, wobei die Sperreinheit (31) durch:
- ein Sicherheitsmodul (31) und/oder
- ein Linux Security Modul (LSM) (31) und/oder
- ein Betriebssystem (3) und/oder
- ein Linux-Betriebssystem (3) und/oder
- eine Firmware (3)
des Systems (1) ausgebildet ist.

11. System (1) nach einem der vorhergehenden Ansprüche, wobei die Software-implementierte Sperre (3121):
- einen Lesezugriff auf die Systemressource (32) und/oder
- einen Schreibzugriff auf die Systemressource (32) und/oder
- eine Ausführung der Systemressource (32) und/oder
- ein Directory-Listing (32) und/oder
- ein Löschen der Systemressource (32) und/oder
- ein Anlegen einer weiteren Systemressource (32) und/oder
- ein Erstellen und/oder ein Aktivieren weiterer Software-implementierter Sperren (3121)
sperrt.

12. System (1) nach einem der vorhergehenden Ansprüche, wobei die mindestens eine Systemressource (32) als:
- eine Datei (32) und/oder
- eine Konfigurationsdatei (32) einer Hardware-Komponente (1) und/oder
- ein kryptographischer Schlüssel (32) und/oder
- eine Pseudo-Datei (32), welche insbesondere eine Hardware-Komponente (1) in Form einer Datei (32) verfügbar macht und/oder
- ein Systemaufruf (32) und/oder
- eine durch einen Systemaufruf setzbare Information (32),
insbesondere ein Text und/oder ein Attribut-Wert-Paar ausgebildet ist.

13. System (1) nach einem der vorhergehenden Ansprüche,
wobei das Aktivieren der Software-implementierten Sperre (3121) durch:
- einen Systemaufruf oder
- ein Kommandozeilen-Programm
erfolgt.

14. Verfahren ausgebildet eine Software-implementierte Sperre (3121) mindestens einer Systemressource eines Systems (1) zu verwalten,
aufweisend die Schritte:
- ein Aktivieren der Software-implementierten Sperre (3121) auf die mindestens eine Systemressource (32),
- ein Setzen der Software-implementierten Sperre (3121) ab dem Aktivieren immer dann, wenn sich das System (1) in einem Arbeitszustand befindet, wobei sich das System (1) nach einem Starten des Systems (1) in dem Arbeitszustand befindet,
- Ein Aussetzen der Software-implementierten Sperre (3121), sodass die Software-implementierten Sperre bei dem Starten des Systems (1) ungesetzt ist.

15. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach Anspruch 14 ausgeführt werden, wenn das Computerprogramm auf der Recheneinheit ausgeführt wird.
